# FASCICULE DE BREVET EUROPEEN

(11) **EP 2 906 768 B1**
(45) Date de publication et mention de la délivrance du brevet: **22.04.2020**
(21) Numéro de dépôt: 13785536.7
(22) Date de dépôt: 09.10.2013
(51) Int. Cl.: E06B 1/34, A47B 47/00, E06B 3/964, E06B 3/984

(54) **ENSEMBLE COMPORTANT AU MOINS DEUX PLANCHES ASSEMBLABLES TRANSVERSALEMENT ET BOUT A BOUT ET SON APPLICATION A LA FABRICATION D'UN CAISSON DE PORTE OU FENÊTRE**
ANORDNUNG MIT MINDESTENS ZWEI TRANSVERSAL ODER ENDMONTIERBAREN PLATTEN SOWIE IHRE VERWENDUNG ZUR HERSTELLUNG EINES RAHMENS FÜR EINE TÜR ODER EIN FENSTER
ASSEMBLY COMPRISING A LEAST TWO BOARDS THAT CAN BE ASSEMBLED TRANSVERSELY AND END TO END, AND USE THEREOF FOR MANUFACTURING A BOX FOR A DOOR OR A WINDOW

(30) Priorité: 10.10.2012 FR 1259644; 25.02.2013 FR 1351609
(43) Date de publication de la demande: 19.08.2015
(73) Titulaire: Findes, 8980 Zandvoorde (BE); Proot, Bernard, 59700 Marcq En Baroeul (FR)
(72) Inventeur: PROOT, Bernard, F-59700 Marcq En Baroeul (FR); DESMET, Jacques, B-8980 Zandvoorde (BE)
(74) Mandataire: Matkowska, Franck
(86) Numéro de dépôt international: PCT/FR2013/052406
(87) Numéro de publication internationale: WO 2014/057216

(56) Documents cités:
- FR-A1- 2 529 819
- FR-A1- 2 621 657
- FR-A1- 2 678 031
- US-A- 6 050 015

## Description

### Domaine technique

La présente invention concerne l'assemblage de deux planches bout à bout et transversalement l'une par rapport à l'autre et son application à la fabrication d'un encadrement, et notamment d'un caisson pour un élément de fermeture de type porte, fenêtre ou baie vitrée.

### Art antérieur

Dans le domaine du bâtiment, il est usuel de fabriquer, et d'installer dans des ouvertures, des caissons qui sont positionnés à l'interface entre le gros œuvre (ouverture dans un mur ou dans une paroi) et un élément de fermeture, du type fenêtre, baie vitrée ou porte. Généralement, chaque caisson comporte trois planches qui sont assemblées bout à bout et à angle droit, en sorte de former un caisson en forme de U qui est ouvert en partie basse et qui s'étend sur seulement trois côtés de l'élément de fermeture, ou quatre planches qui sont assemblées bout à bout et à angle droit, en sorte de former un caisson fermé, qui entoure l'élément de fermeture sur toute sa périphérie.

A ce jour, pour la fabrication de ce type de caisson, l'assemblage des planches est un assemblage bout à bout de type chevillé au moyen de tourillons, ce qui oblige préalablement le poseur à prendre les mesures de l'ouverture sur le chantier, et à fournir ces mesures à l'usine de fabrication des planches afin que les planches soient fabriquées en usine à la bonne longueur.

Ensuite, les planches sont acheminées sur le chantier, où elles sont assemblées bout à bout et à angle droit par le poseur au moyen de tourillons et par collage, afin de former le caisson. Ce type d'assemblage n'est pas robuste, car les planches, une fois assemblées, ne sont pas parfaitement maintenues l'une par rapport à l'autre et ont tendance à bouger angulairement l'une par rapport à l'autre. En outre ce type d'assemblage est relativement fastidieux à mettre en œuvre pour le poseur.

Une fois le caisson assemblé, le poseur effectue la pose du caisson dans l'ouverture autour de l'élément de fermeture de type fenêtre ou porte. Enfin, dans une dernière étape de finition, le poseur fixe, autour de l'élément de fermeture, par exemple au moyen d'agrafes, un encadrement de finition décoratif, plus communément désigné chambranle.

On a par ailleurs également proposé dans la demande de brevet internationale WO 00/66867 un caisson préfabriqué adapté pour être posé dans une ouverture dans lequel les planches du caisson sont assemblées au moyen d'équerres d'assemblages positionnées respectivement dans chaque angle à l'extérieur du caisson. Dans cette solution, chaque planche comporte sur sa face externe une rainure d'assemblage transversale qui s'étend parallèlement aux deux bords transversaux de la planche. Chaque équerre d'assemblage comporte deux bras rigides qui se terminent chacun par un élément d'assemblage mâle en forme de crochet transversal. Une fois les deux planches positionnées bout à bout et transversalement l'une par rapport à l'autre, avec un bord transversal d'une planche orienté vers la face interne de l'autre planche, les deux planches peuvent être assemblées ensemble au moyen d'une équerre d'assemblage positionnée à l'extérieur et dans l'angle des deux planches, les crochets de l'équerre étant insérés respectivement dans les rainures transversales des deux planches. Grâce à une certaine élasticité des deux bras de l'équerre, les deux crochets sont maintenus par tension dans les rainures transversales de l'équerre d'assemblage.

De manière avantageuse, dans cette solution, les équerres d'assemblage étant positionnées à l'extérieur du caisson, une fois le caisson monté dans une ouverture, elles ne sont pas visibles.

Toutefois, comme pour la solution susvisée d'assemblage bout à bout de type chevillé, de manière désavantageuse cette solution décrite dans la demande de brevet internationale WO 00/66867 oblige préalablement le poseur à prendre les mesures de l'ouverture sur le chantier, et à fournir ces mesures à l'usine de fabrication des planches afin que les planches soient fabriquées en usine à la bonne longueur. En outre, de manière désavantageuse, cette solution d'assemblage ne permet pas, lors de la pose, un ajustement de la position des planches par exemple pour corriger d'éventuelles erreurs de prise de mesure ou pour permettre une meilleure adaptation du caisson dans l'ouverture.

On a par ailleurs proposé, par exemple dans la demande de brevet US 2012/0240494, des équerres pour l'assemblage de planches à angle droit. Ces équerres d'assemblage sont avantageusement positionnées sur l'extérieur des planches. Cependant, de manière contraignante, ces équerres d'assemblage peuvent être mise en œuvre uniquement avec des planches dont les bords transversaux sont coupés à 45° et sont positionnés en contact l'un de l'autre pour former un angle droit, et à la différence de la solution de la demande de brevet internationale WO 00/66867, ces équerres d'assemblage ne peuvent pas être utilisées pour assembler deux planches bout à bout et transversalement l'une par rapport à l'autre, avec un bord transversal d'une planche orienté vers la face interne de l'autre planche.

On a par ailleurs proposé dans la demande de brevet français FR 2621 657 un système d'assemblage selon le préambule de la revendication 1. Ce document propose d'assembler deux planches à angle droit au moyen d'équerres d'assemblage. Cependant ces équerres d'assemblage sont positionnées sur l'intérieur des planches.

### Objectifs de l'invention

La présente invention vise à proposer une nouvelle solution qui permet l'assemblage de deux planches bout à bout et transversalement l'une par rapport à l'autre avec un bord transversal d'une planche orienté vers la face interne de l'autre planche, et qui notamment pallie les inconvénients précédemment décrits inhérents à la demande brevet internationale WO 00/66867.

La solution d'assemblage de l'invention vise également à proposer une nouvelle solution qui permet l'assemblage de deux planches bout à bout et transversalement l'une par rapport à l'autre avec un bord transversal d'une planche orienté vers la face interne de l'autre planche, dans laquelle les moyens d'assemblage des planches sont masqués par les planches et ne sont pas visibles depuis l'intérieur de l'angle formé par les planches.

Plus particulièrement, la solution d'assemblage de l'invention permet également un assemblage robuste et rapide des planches.

La solution d'assemblage de l'invention peut avantageusement être utilisée pour la fabrication de caisson de fenêtre, de porte ou de baie vitrée, mais n'est pas limitée à cette seule application.

### Résumé de l'invention

L'invention a ainsi pour premier objet un ensemble comportant au moins deux planches, et au moins un moyen d'assemblage des deux planches, tel que défini dans la revendication 1.

L'invention a pour deuxième objet un assemblage tel que défini dans la revendication 8.

L'invention a pour troisième objet l'utilisation d'un assemblage susvisé comme caisson dans une ouverture, et notamment comme caisson de porte, de fenêtre ou de baie vitrée.

L'invention a également pour quatrième objet un procédé d'assemblage de deux planches de l'ensemble susvisé, tel que défini dans la revendication 11.

L'invention a également pour objet un procédé de fabrication et de pose d'un caisson de porte, fenêtre ou baie vitrée, tel que défini dans la revendication 12.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- la figure 1 est une vue en perspective représentant un exemple de caisson pour fenêtre prêt à être posé dans une ouverture d'une paroi ;
- la figure 2 représente une première variante de réalisation d'un ensemble de l'invention comportant quatre planches, quatre équerres d'assemblage et huit vis de fixation, et permettant la fabrication du caisson de la figure 1 ;
- la figure 3 représente une variante de réalisation d'une équerre d'assemblage ;
- les figures 4 à 9 illustrent les principales étapes d'assemblage de deux planches de l'ensemble de la figure 2, au moyen d'une équerre d'assemblage et de deux vis de fixation ;
- la figure 10 représente deux planches de l'ensemble de la figure 2 assemblées au moyen d'une équerre d'assemblage et de deux vis de fixation, l'équerre d'assemblage étant représentée en déchiré de manière à montrer le positionnement des deux vis de fixation ;
- la figure 11 représente une variante de réalisation mettant en œuvre une cale pour caler la position d'assemblage d'une équerre d'assemblage par rapport à une planche ;
- les figures 12 à 14 illustrent les principales étapes de mise en œuvre de la cale de la figure 11 ;
- la figure 15 représente une autre variante de réalisation d'un ensemble de l'invention comportant deux planches comportant chacune deux rainures d'assemblage, deux équerres d'assemblage (une équerre par rainure), et quatre vis de fixation (deux vis de fixation pour chaque équerre) ;

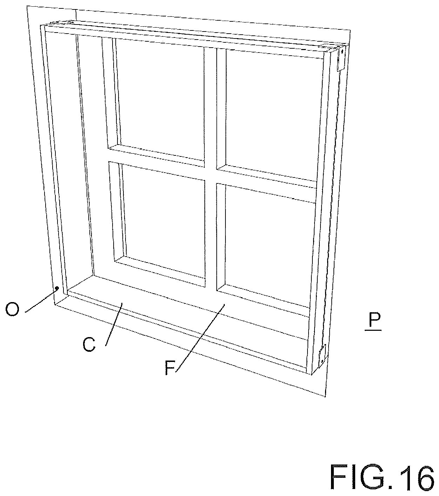

- la figure 16 est une vue en perspective représentant le caisson de la figure 1, une fois posé dans l'ouverture de la paroi ;
- la figure 17 représente une deuxième variante de réalisation d'une équerre d'assemblage ;
- la figure 18 est un agrandissement d'une planche au niveau d'une rainure d'assemblage de la planche ;
- les figures 19 à 21 représente une deuxième variante d'équerre d'assemblage avec crans de serrage sur une aile et crans de blocage sur l'autre aile ;
- la figure 22 représente une troisième variante d'équerre d'assemblage avec crans de serrage sur une aile et crans de blocage sur l'autre aile ;
- les figures 23 et 24 illustrent les opérations d'assemblage de deux planches bout à bout et perpendiculairement l'une à l'autre au moyen d'une équerre d'assemblage conforme à la deuxième ou troisième variante de réalisation.
- la figure 25 illustre un ajustement de la position longitudinale d'une planche par rapport à l'autre ;
- La figure 26 est une vue en coupe transversale d'un planche et d'un élément d'assemblage d'une équerre d'assemblage, ledit élément d'assemblage étant élastiquement déformable et emboîté avec serrage élastique dans la rainure de la planche ;
- les figures 27 à 30 représentent respectivement quatre autres variantes d'équerre d'assemblage ;
- les figures 31 et 32 représentent une huitième variante d'équerre d'assemblage.

### Description détaillée

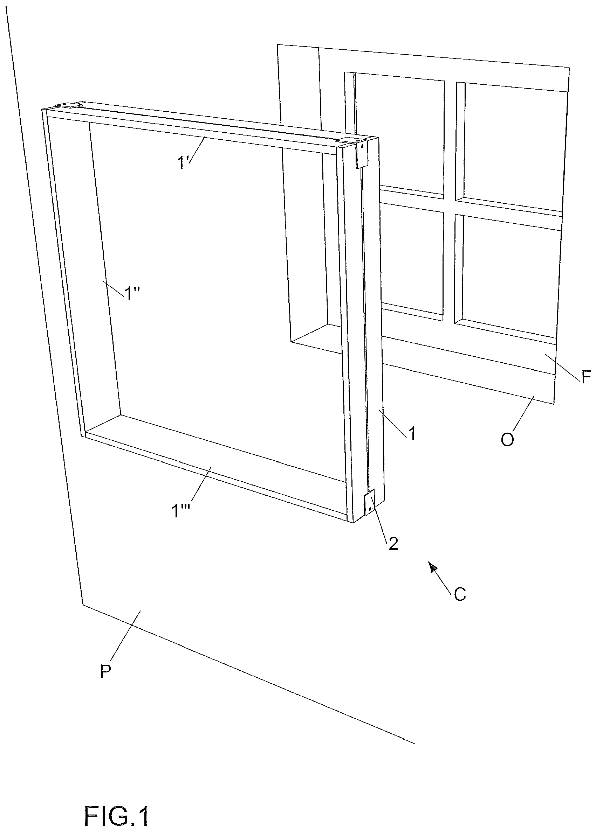

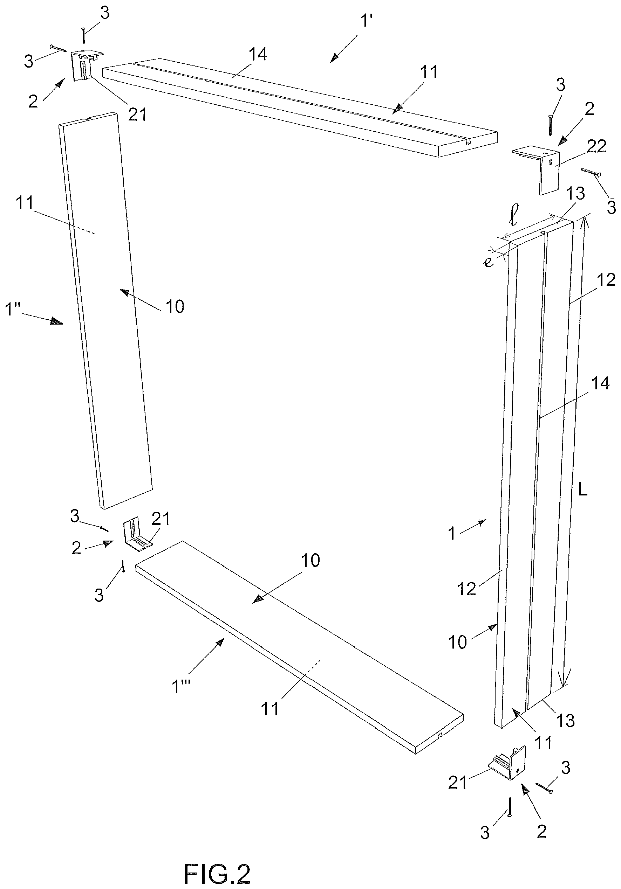

On a représenté sur la figure 1, un exemple de réalisation d'un caisson de finition C destiné à être monté dans l'ouverture O d'une paroi P recevant une fenêtre F. Ce caisson C est obtenu par assemblage des éléments de l'ensemble représenté sur la figure 2.

En référence à la figure 2, l'ensemble pour la construction du caisson C comporte quatre planches 1, 1', 1" 1''', quatre équerres d'assemblage 2, et huit vis de fixation 3 (deux vis de fixation 3 par équerre d'assemblage).

Chaque planche 1, 1', 1" 1''' forme un parallélépipède rectangle d'épaisseur e, de longueur L et de largeur l. Les deux planches opposées 1 et 1" sont identiques, de même que les deux planches opposées 1' et 1'''.

Chaque planche 1, 1', 1" 1''' comporte une face principale interne 10, une face principale externe 11, deux bords longitudinaux opposés 12 qui s'entendent suivant la direction longitudinale (longueur) de la planche, et deux bords transversaux opposés 13 qui s'étendent transversalement aux bords longitudinaux et qui correspondent à la largeur de la planche. La face 11 de chaque planche, dite face de montage, comporte une rainure d'assemblage longitudinale 14 qui s'étend longitudinalement entre les deux bords transversaux 13 sur toute la longueur L de la planche. Dans l'exemple particulier illustré, la rainure 14 est de préférence centrée sur la largeur de la planche. Dans une autre variante, la rainure 14 peut être décentrée par apport à l'axe longitudinal médian de la planche. Dans cet exemple, ladite face de montage de la planche correspond à la face externe 11 de la planche, et la rainure d'assemblage longitudinale 14 est une rainure externe.

Les planches 1, 1', 1" 1''' peuvent être réalisées dans tout matériau et de préférence dans tout matériau pouvant être scié manuellement. Les planches 1, 1', 1", 1''' sont par exemple en bois brut, en bois laminé, ou en plastique.

Les planches 1, 1', 1" 1''' peuvent avantageusement être obtenues en coupant à la bonne longueur L, et le cas échéant à la bonne largeur l, chaque planche dans une ou plusieurs planches standards de plus grande longueur qui ont été fabriquées en usine. En pratique, le poseur du caisson prend sur le chantier les mesures de l'ouverture O, afin de déterminer la bonne longueur L et la bonne largeur l de chaque planche, puis réalise la coupe des planches sur le chantier à la bonne longueur et le cas échéant à la bonne largeur l, par exemple au moyen d'une scie égoïne, à partir d'une ou plusieurs planches standards de plus grande longueur qui ont été fabriquées en série en usine. On évite ainsi avantageusement une fabrication sur mesure en usine de chaque planche 1, 1', 1" 1'''.

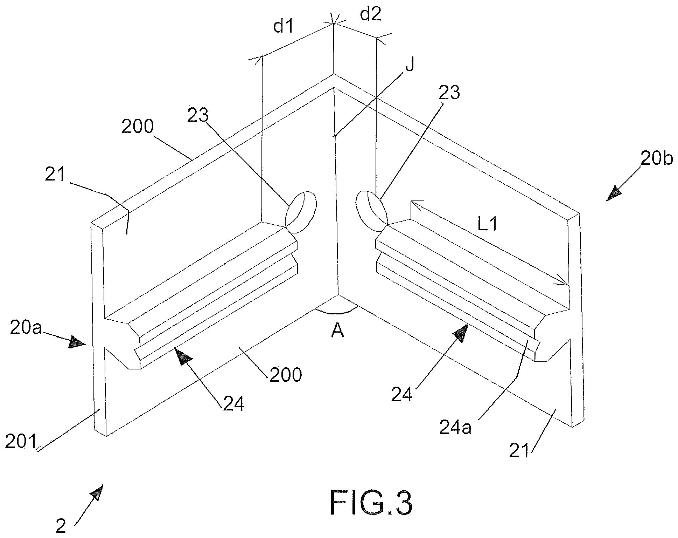

En référence à la figure 3, chaque équerre d'assemblage 2 est une pièce rigide, par exemple en plastique, formant deux ailes 20a, 20b à angle droit (figure 3/ angle A entre les deux ailes 20a et 20b égal à 90°). Chaque aile 20a, 20b comporte deux bords longitudinaux opposés 20, un bord transversal 201 situé à l'opposé de la jonction J entre les deux ailes 20a, 20b, et une face d'assemblage 21. Dans l'exemple particulier de la figure 3, les faces d'assemblage 21 correspondent aux faces internes de l'angle de l'équerre 2.

Chaque aile 20a, 20b de l'équerre 2 comporte un trou traversant 23 au voisinage de la jonction J entre les deux ailes 20a, 20b. Chaque aile 20a, 20b est en outre pourvue, sur sa face de montage interne 21, d'un élément d'assemblage mâle 24 en saillie par rapport à la face interne 21. Les faces interne 21 des deux ailes 20a, 20b en forme d'équerre définissent un angle d'assemblage A inférieur à 180°, et dans l'exemple particulier illustré sensiblement égal à 90°. Ces deux ailes 20a, 20b font office de pont de liaison rigide entre les deux éléments d'assemblage mâle 24.

Dans l'exemple illustré, l'équerre 2 étant faite d'une seule pièce monobloc, obtenue par exemple par moulage, chaque élément d'assemblage mâle 24 en saillie est une partie venue de la même matière que les ailes 20a, 20b.

Chaque élément d'assemblage mâle 24 est plus particulièrement un élément longiligne de longueur L1, qui s'étend longitudinalement depuis un point positionné à une distance d₁ de l'autre aile, de préférence mais non nécessairement jusqu'au bord transversal 201 de l'aile portant élément d'assemblage mâle 24. Les deux éléments d'assemblage mâles (24) s'étendent ainsi en longueur suivant deux directions transversales. Pour au moins un des éléments d'assemblage mâle 24, la distance d₁ est supérieure à l'épaisseur e d'une planche.

Chaque trou traversant 23 d'une aile est positionné entre la jonction J des deux ailes 20a, 20b et l'élément d'assemblage mâle 24 porté par la même aile, à une distance d₂ de la jonction J qui est inférieure à l'épaisseur e d'une planche.

Chaque élément d'assemblage mâle 24 comporte en face avant une gorge longitudinale 24a destinée ultérieurement à recevoir une vis de fixation 3. Cette gorge longitudinale 24a est alignée avec le trou traversant 23 de l'autre aile de l'équerre.

Chaque élément d'assemblage mâle 24 est dimensionné par rapport aux rainures d'assemblage 14 de manière à pouvoir être emboîté dans une rainure d'assemblage lors du montage du caisson C, par exemple avec un jeu d'emboîtement juste suffisant pour permettre un coulissement longitudinal guidé de l'élément d'assemblage mâle 24 le long de la rainure d'assemblage 14 ou sans jeu avec un serrage suffisant pour immobiliser par serrage l'élément d'assemblage mâle 24 dans la rainure 14, tout en permettant un coulissement longitudinal forcé de l'élément d'assemblage mâle 24 dans la rainure 14

Les opérations d'assemblage du caisson C de la figure 1 à partir de l'ensemble de pièces de la figure 2 vont à présent être détaillées. On considère dans la suite que le poseur du caisson C a préalablement coupé les planches 1, 1', 1", 1''' à la bonne longueur L, et le cas échéant à la bonne largeur l.

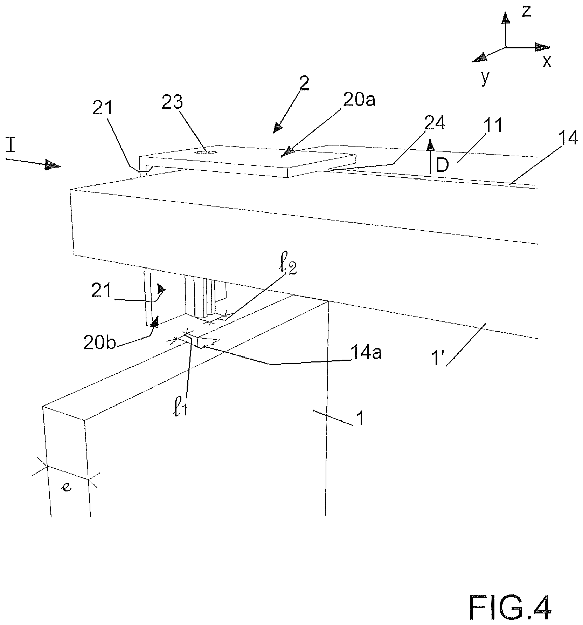

En référence à la figure 4, pour assembler les deux planches 1 et 1' à angle droit, on commence par emboîter un des éléments d'assemblage mâle 24 dans la rainure 14 de la planche 1', en l'introduisant dans la rainure (figure 4 - Flèche d'introduction I) par une des extrémités de la rainure 14. Puis on fait coulisser longitudinalement l'équerre 2 le long de la rainure 14 jusque dans la position d'assemblage de la figure 4.

On notera que la rainure 14 est profilée de telle sorte qu'une fois un élément d'assemblage mâle 24 emboîté dans la rainure 14 par l'extrémité d'une planche, il est bloqué en translation par la rainure 14 dans la direction D transversale à la face de montage 11 de la planche, de manière à éviter un déboîtement de l'élément d'assemblage mâle 24 en dehors de la rainure 14 dans cette direction transversale D. Dans la variante de la figure 4, ceci est obtenu en prévoyant une largeur l₁ de rainure 14 (figure 4) au niveau de la face de montage 11 de la planche qui est suffisamment faible par rapport à la dimension transversale maximale l₂ de l'élément d'assemblage mâle 24 pour obtenir ledit blocage de l'élément d'assemblage mâle 24 dans la rainure.

Dans cette position d'assemblage de la figure 4, la face d'assemblage 21 de l'aile 20a de l'équerre 2, qui porte l'élément d'assemblage mâle 24 emboîté dans la rainure 24, est positionnée à plat contre la face de montage 11 de la planche 1'. La rainure 14 en combinaison avec l'élément d'assemblage mâle 24 permettent de bloquer en translation l'équerre 2 par rapport à la planche 1' d'une part transversalement au plan de la face de montage 11 de la planche 1', et d'autre part dans les deux directions transversales perpendiculaires à la direction longitudinale X de la planches 1', tout en permettant une translation guidée de l'équerre 2 le long de la rainure 14'. Il en résulte qu'une fois emboîtée dans la rainure 14 de la planche 1', l'équerre 2 possède un seul degré de liberté en translation le long de la rainure 14.

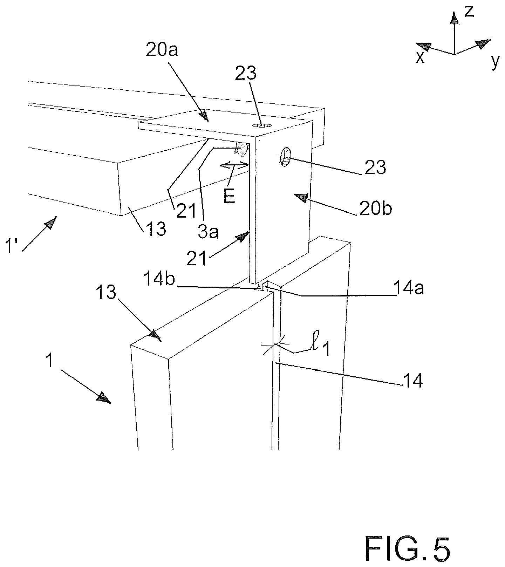

Dans la position d'assemblage de la figure 4, la face d'assemblage 21 de l'autre aile 20b de l'équerre 2 est positionnée à une distance E (figure 5) de l'extrémité de la planche 1' qui est sensiblement égale à l'épaisseur e de la planche 1. Pour caler cet écartement E, on peut par exemple utiliser un gabarit ou une cale d'épaisseur e, ladite cale pouvant plus particulièrement être constituée par un morceau de planche.

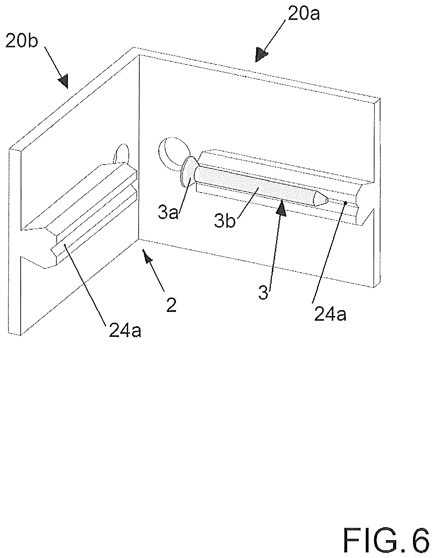

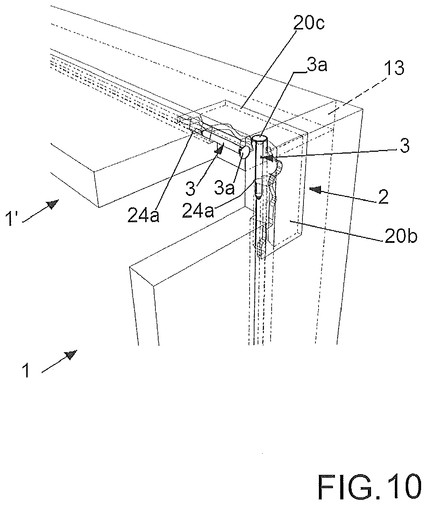

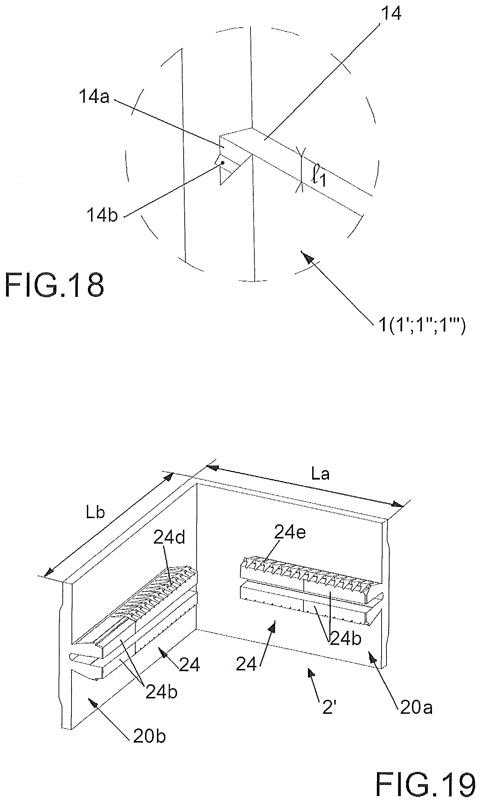

En référence à la figure 5, une fois que l'on a fait coulisser l'équerre 2 jusque dans sa position d'assemblage, on fixe l'aile 20a de l'équerre 2 avec la planche 1' au moyen d'une vis de fixation 3 qui est vissée dans la gorge 24a (figures 6 et 10) de l'élément d'assemblage mâle 24 de l'aile 20a et dans le fond 14a de la rainure 14 de la planche 1'. Cette vis de fixation 3 est introduite dans l'espace entre le fond 14a de la rainure 14 de la planche 1' et la gorge 24a (figure 10) de l'élément d'assemblage mâle 24 de l'aile 20a de l'équerre 2, en étant passée à travers le trou traversant 23 de l'aile 20b de l'équerre. De préférence, pour faciliter la pénétration de la tige filetée 3b de la vis de fixation 3 dans le fond d'une rainure 14, le fond 14a de la rainure 14 comporte une gorge longitudinale 14b en V (figure 5 et figure 18).

La section de l'orifice traversant 23 de l'aile 20b est supérieure à la section de la tête 3a de la vis de fixation 3, de manière à permettre le passage de la tête 3a de la vis de fixation 3 à travers l'aile 20b. La vis de fixation 3 est vissée de telle sorte que la tête 3a de la vis 3 se trouve positionnée entre l'aile 20b de l'équerre d'assemblage 2 et le bord transversal 13 de la planche 1' (figures 5 et 10).

Une fois l'équerre 2 fixée à la planche 1', on positionne l'autre planche 1 à angle droit par rapport à la planche 1' tel qu'illustré sur la figure 5, c'est-à-dire avec l'un des bord transversaux 13 de la planche 1 orienté vers la face d'assemblage 21 de l'aile 20a de l'équerre d'assemblage, et on déplace la planche 1 dans la direction Z parallèle à la face d'assemblage 21 de l'aile 20b de l'équerre, de manière à emboîter l'élément d'assemblage mâle 24 porté par l'aile 20b de l'équerre dans la rainure 14 de la planche 1. Ensuite on fait coulisser la planche 1 dans la direction Z par rapport à l'élément d'assemblage mâle 24 jusqu'à ce que le bord transversal 13 de la planche 1 soit positionné en contact plan avec la face d'assemblage 21 de l'aile 20a de l'équerre 2 (figure 6).

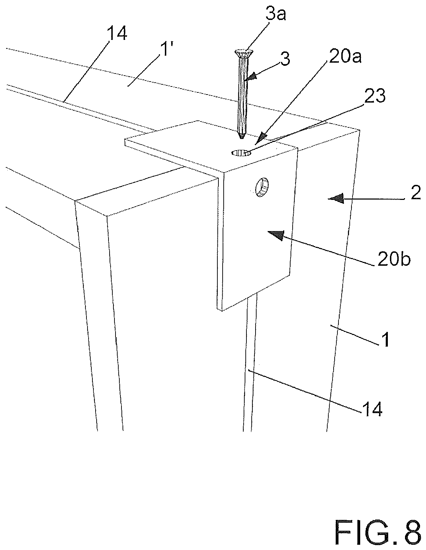

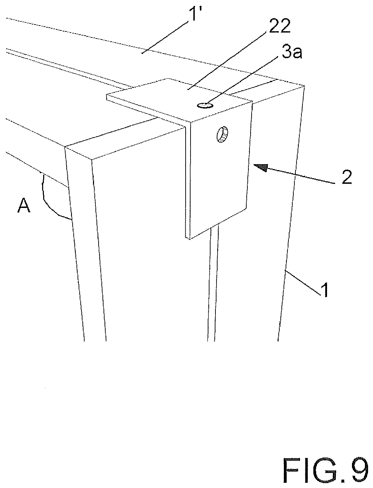

Ensuite, en référence aux figures 8 à 10, on fixe l'équerre 2 avec la planche 1 au moyen d'une vis de fixation 3, qui est passée à travers le trou traversant 23 de l'aile 20a de l'équerre 2 (figure 8), et qui est vissée dans la gorge 24a (figure 10) de l'élément d'assemblage mâle 24 de l'aile 20b de l'équerre 2 (figure 10) et dans le fond de la rainure 14 de la planche 1. La section de l'orifice traversant 23 de l'aile 20a est inférieure à la section de la tête 3a de la vis de fixation 3, de manière à bloquer la tête 3a de la vis de fixation 3 contre la face 22 de l'aile 20a de l'équerre (figure 9).

Une fois ces opérations terminées, les deux planches 1 et 1' sont assemblées bout à bout et à angle droit au moyen de l'équerre d'assemblage 2, qui est positionnée comme renfort de l'angle formé par les deux planches 1 et 1', avec les ailes 20a; 20b de l'équerre 2 positionnées à plat respectivement contre les faces de montage 11 des deux planches 1 et 1', et avec les éléments d'assemblage mâle 24 de l'équerre d'assemblage 2 emboîtés respectivement dans les rainures d'assemblage 14 des deux planches 1 ; 1'. Une fois les deux planches 1 et 1' assemblées, le bord transversal 13 de la planche 1' est orienté et en contact avec la face interne l'autre planche 1. Cet assemblage est robuste, facile et rapide à réaliser, et les deux planches sont parfaitement orientées à angle droit l'une par rapport.

Pour fabriquer le caisson C à quatre côtés de la figure 1, on réitère trois fois ces opérations d'assemblage de deux planches avec les autres planches 1" et 1''' (assemblage des deux planches 1 et 1" ; assemblage des deux planches 1''' et 1 ; assemblage des deux planches 1''' et 1").

Dans une autre variante, le caisson C pourrait également former un U et comporter uniquement trois côtés formés par les planches 1, 1' et 1".

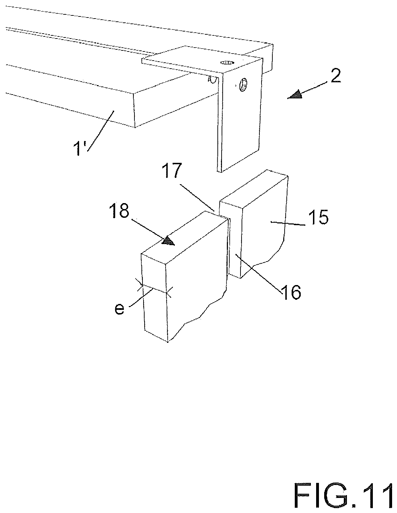

On a représenté sur les figures 11 à 14, une variante de réalisation, dans laquelle on utilise une cale 15 d'épaisseur e, et comportant une rainure 16, et une découpe 17 dans son bord transversal 18 au niveau de la rainure 16 de la planche de manière à laisser un passage libre à travers la cale 15 pour le passage d'un élément de fixation mâle 24 d'une équerre 2 et le passage d'une vis 3.

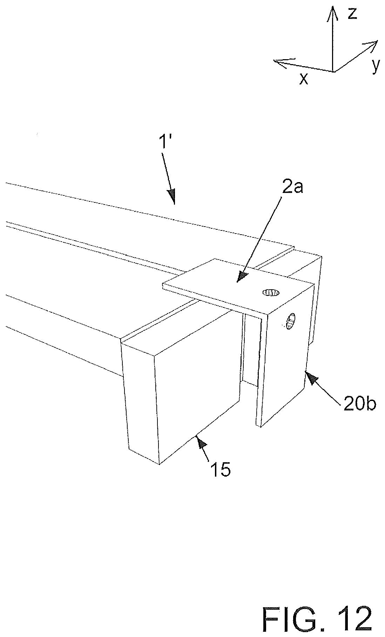

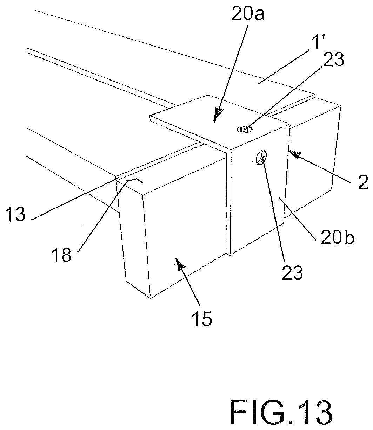

Dans cette variante, on commence par positionner à angle droit et bout à bout la planche 1' et la cale 15, tel qu'illustré sur la figure 12, puis on emboîte l'élément d'assemblage mâle 24 de l'aile 20a de l'équerre 2 dans la rainure 14 de la planche 1', en le faisant passer dans la direction longitudinale X de la planche 1' à travers la découpe d'extrémité 17 de la cale 15. Puis on poursuit l'emboîtement de l'équerre 2 en la faisant coulisser dans la direction longitudinale X de la planche 1' jusqu'à ce que l'élément d'assemblage mâle 24 de l'aile 20b de l'équerre 2 soit complètement emboîté dans la rainure 14 de la planche 1 tel qu'illustré sur la figure 13.

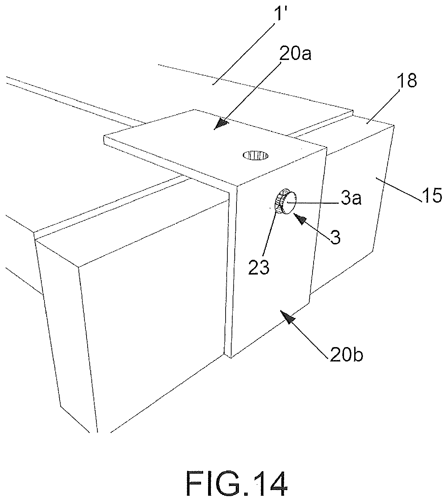

Ensuite, une fois l'équerre 2 emboîtée sur la planche 1' et calée en position d'assemblage par la cale 15, il suffit de fixer l'équerre 2 avec la planche 1' au moyen d'une vis de fixation 3 (figure 14) de manière comparable à ce qui a été précédemment décrit, mais cette fois ci en faisant passer la vis de fixation 3 (figure 14) non seulement à travers le trou traversant 23 de l'aile 20b de l'équerre, mais également à travers la découpe d'extrémité 16 de la cale 15.

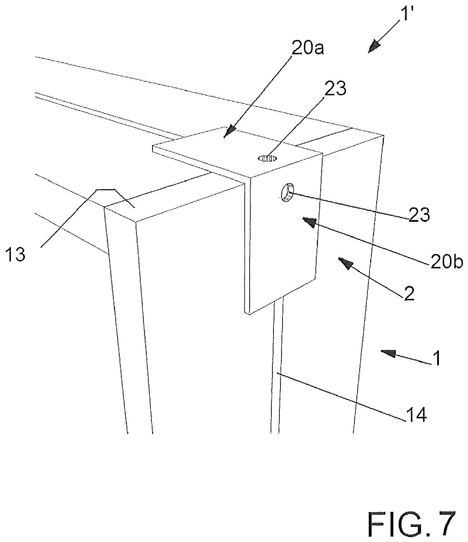

Pour finir l'assemblage, on retire la cale 15, et on assemble l'autre planche 1 avec la planche 1' au moyen de l'équerre 2 et d'une vis de fixation 3 de manière comparable à ce qui a été précédemment décrit en référence aux figures 7 à 10.

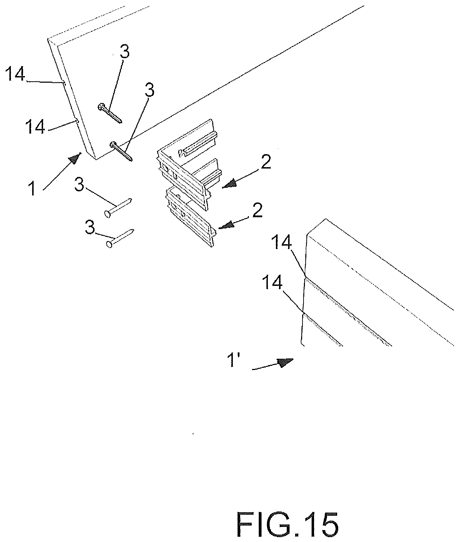

Dans le cadre de l'invention, les planches peuvent comporter plusieurs (au moins deux) rainures d'assemblage 14. A titre d'exemple, on a représenté sur la figure 15, une autre variante de réalisation dans laquelle chaque planche 1, 1' comporte deux rainures d'assemblage 14, et les planches 1, 1' peuvent être assemblées bout à bout à angle droit au moyen de deux équerres d'assemblage 2.

Dans une autre variante, les deux équerres d'assemblage 2 de la figure 15 pourraient être remplacées par une seule équerre d'assemblage dont chaque aile 20a, 20b est pourvue de deux éléments d'assemblage mâle (un élément d'assemblage mâle 24 par rainure d'assemblage 14).

Dans toutes les variantes illustrées sur les figures annexées, chaque rainure d'assemblage 14 d'une planche s'étend longitudinalement sur toute la longueur de la planche, ce qui permet avantageusement au poseur de couper lui-même à longueur voulue chaque planche à partir d'au moins une planche de plus grande longueur. Dans une autre variante, il est possible de mettre en œuvre des planches comportant à chaque extrémité une rainure d'assemblage 14 de plus faible longueur qui s'étend longitudinalement depuis l'extrémité de la planche sur une longueur inférieure à la longueur totale L la planche.

L'invention n'est pas limitée à l'assemblage bout à bout de deux planches à angle droit, mais peut plus généralement être utilisée pour assembler bout à bout deux planches transversalement l'une par rapport à l'autre avec un angle A entre les deux planches qui n'est pas nécessairement égal à 90°, et qui est compris entre 0° et 180° (A ne pouvant toutefois être égal à 0° ou à 180°), et de préférence entre 45° et 135°. Dans ce cas les bords transversaux 13 des planches peuvent par exemple être biseautés de manière à obtenir cet angle A différent de 90°. L'angle A entre les deux ailes 20a et 20b des équerres d'assemblage sera adapté en conséquence.

Il convient également de noter que dans le cas d'un assemblage à angle droit, les bords transversaux 13 des planches ne sont pas nécessairement plats mais peuvent également être biseautés de manière complémentaire (par exemple à 45°) de manière à pouvoir former un angle droit.

Dans les variantes de réalisation qui sont illustrées sur les figures annexées, les équerres 2 sont prévues de manière à être emboîtées sur la partie externe de l'angle formé par les planches, ce qui est important dans le cas de la fabrication d'un caisson C de fenêtre ou de porte.

L'invention n'est toutefois pas limitée à la fabrication d'un caisson pour l'encadrement d'une fenêtre ou d'une porte, mais peut s'appliquer à tout assemblage transversal et bout à bout de deux planches.

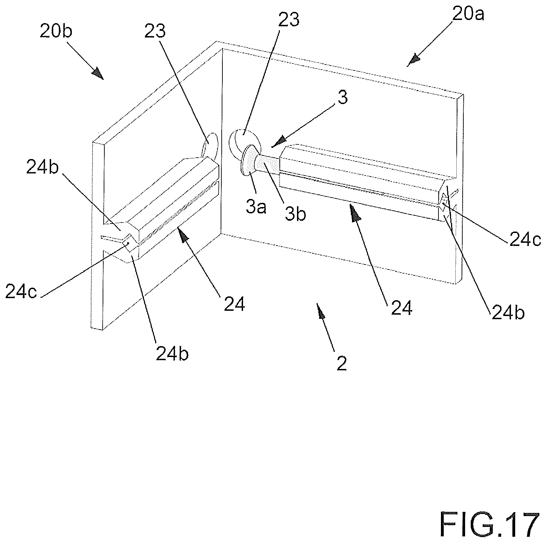

Dans une autre variante illustrée sur la figure 17, chaque aile 20a, 20b de l'équerre comporte un élément d'assemblage mâle 24 qui est déformable, de préférence élastiquement. Plus particulièrement, chaque élément d'assemblage mâle 24 forme une mâchoire à deux lèvres de serrage 24b, qui délimitent entre elles un logement longitudinal 24c pour la tige filetée 3b d'une vis de fixation, et qui sont aptes à être écartées l'une de l'autre, de préférence élastiquement. Lors du vissage de la vis de fixation 3 dans cet élément d'assemblage mâle 24, la tige filetée 3b de la vis 3 est vissée dans le logement longitudinal 24c, et provoque un léger écartement des deux lèvres de serrage 24b qui permet un blocage par serrage de l'élément d'assemblage mâle 24 dans la rainure d'assemblage 14 correspondante d'une planche.

Dans une autre variante, l'élément d'assemblage mâle 24, tel que par exemple celui de la figure 17, peut être élastiquement déformable de manière à obtenir un emboîtement élastique de l'élément d'assemblage mâle 24 dans la rainure 14. Plus particulièrement, l'écartement au repos des deux lèvres de serrage 24b de l'élément d'assemblage mâle 24 est par exemple légèrement supérieur à la largeur maximale de la rainure 14, et l'introduction de l'élément d'assemblage 24 dans la rainure 14 est réalisée en exerçant sur les deux lèvres de serrage 24b une force les rapprochant l'une de l'autre. Une fois l'élément d'assemblage 24 emboîté à force dans la rainure 14, les deux lèvres de serrage 24b s'écartent élastiquement l'une de l'autre, provoquant un serrage élastique de l'élément d'assemblage mâle 24 dans la rainure. La mise en œuvre d'un élément d'assemblage mâle 24 élastiquement déformable permet avantageusement d'éviter l'utilisation de vis de fixation 3 pour immobiliser l'équerre d'assemblage 2 par rapport aux planches. La rainure 14 et l'élément d'assemblage mâle 24 élastiquement déformable peuvent être conçus pour permettre un emboîtement longitudinal élastique de l'élément d'assemblage mâle 24 dans la rainure 14 par l'extrémité de la planche, tel que précédemment décrit, et/ou peuvent être conçus pour permettre un emboîtement élastique de l'élément d'assemblage mâle 24 dans la rainure 14 dans une direction transversale, et notamment perpendiculaire, à la face de montage 11 de la planche.

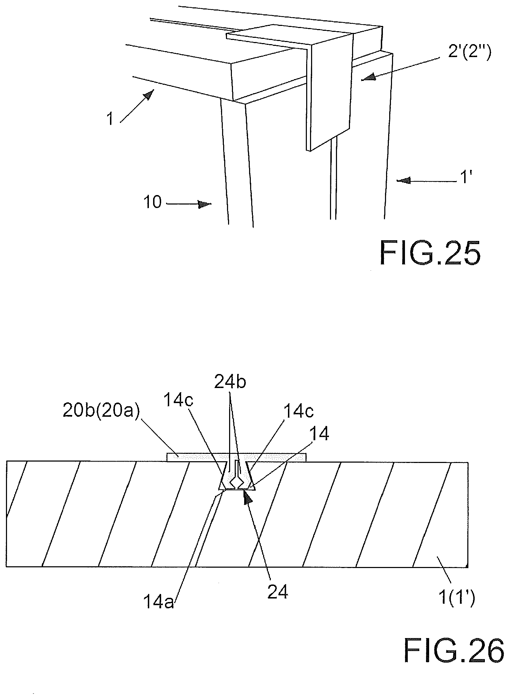

On a représenté sur la figure 26, une autre variante d'élément d'assemblage mâle 24, qui ne nécessite pas la mise en œuvre de vis de fixation, et dont les deux lèvres de serrage 24b sont élastiquement déformables et sont emboitées avec serrage élastique dans une rainure 14 en forme de queue d'aronde. Une fois emboîtées dans la rainure 14, les deux lèvres de serrage 24b sont bloquées par les parois inclinées 14c de la rainure 14 qui font obstacle au déboîtement de l'élément d'assemblage mâle 24.

On a représenté sur les figures 19 à 22, une autre variante de réalisation d'une équerre d'assemblage 2', qui ne nécessite pas la mise en œuvre de vis de fixation. Chaque aile 20a, 20b de cette équerre d'assemblage 2' porte un l'élément d'assemblage mâle 24, qui est de préférence élastiquement déformable de manière à obtenir un emboîtement élastique de l'élément d'assemblage mâle 24 dans une rainure 14 d'une planche 1 ou 1'.

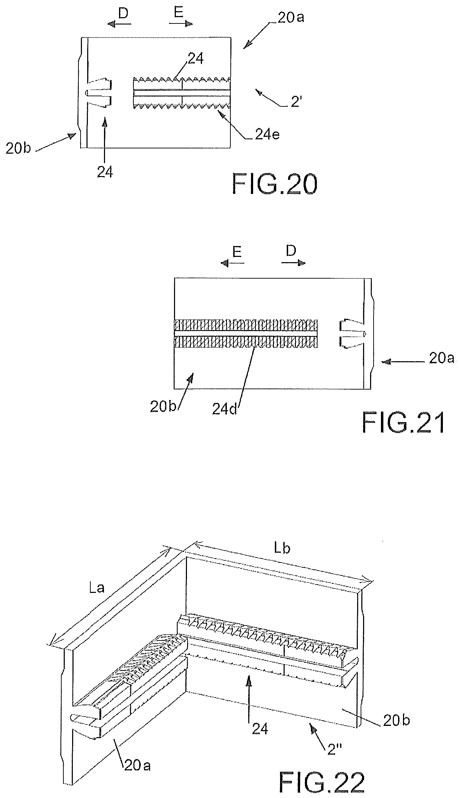

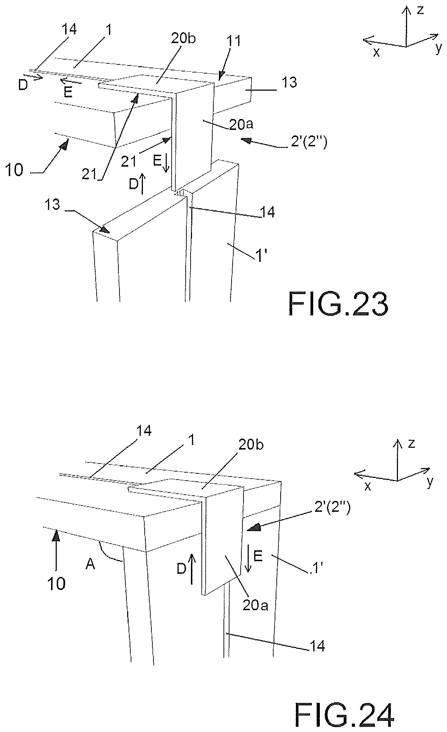

L'élément d'assemblage mâle 24 de l'aile 20b est pourvu de crans de serrage 24d (figure 21) qui permettent d'augmenter la friction entre cet élément d'assemblage mâle 24 et les parois d'une rainure 14 d'un planche, et par là-même le serrage de cet élément d'assemblage mâle 24 dans la rainure 14, sans toutefois empêcher le coulissement dans les deux directions longitudinales E et D (figure 23) de cet élément d'assemblage mâle 24 dans la rainure 14 d'une planche.

L'élément d'assemblage mâle 24 de l'autre aile 20a est pourvu de crans de blocage 24e (figure 20) qui sont orientés de manière à permettre le coulissement de cet élément d'assemblage mâle 24 dans une rainure 14 d'une planche dans la direction d'emboîtement E de l'élément d'assemblage mâle 24 dans la rainure 14, mais qui permettent un blocage de l'élément d'assemblage mâle 24 en empêchant le coulissement de l'élément d'assemblage mâle 24 dans une rainure 14 dans la direction de déboîtement opposée D.

Plus particulièrement, mais non nécessairement, la longueur Lₐ de l'aile 20a de l'équerre 2' est supérieure à la longueur L_{b} de l'aile 20b, la différence de longueur étant choisie de manière à compenser l'épaisseur de la planche 1 dans l'assemblage (figure 24), de telle sorte que la surface de contact entre l'aile 20b et la planche 1 est sensiblement identique à la surface de contact entre l'aile 20a et les deux planches 1' et 1.

On a représenté sur la figure 22, une autre variante de réalisation d'une équerre d'assemblage 2", qui se différencie de l'équerre d'assemblage 2' de la figure 19, par la mise en œuvre d'un élément d'assemblage 24 porté par l'aile qui s'étend jusque l'autre aile 20a.

En référence aux figures 23 et 24, pour assembler deux planches 1 et 1' bout à bout, perpendiculairement l'une à autre, au moyen d'une équerre d'assemblage 2' (ou 2"), on procède par exemple de la manière suivante.

On emboîte l'élément d'assemblage mâle 24 de l'aile 20b de l'équerre d'assemblage 2' (ou 2"), dans la rainure d'assemblage 14 de la planche 1, de telle sorte que la face d'assemblage 21 de l'aile 20b de l'équerre 2' (ou 2") soit positionnée à plat contre la face de montage 11 de la première planche 1'. La position longitudinale de l'équerre 2' (ou 2") le long de la rainure 14 de la planche 1 est ajustable, les crans de serrage 24d de l'aile 20b n'empêchant pas le coulissement forcé de l'élément d'assemblage mâle 24 de l'aile 20b dans la rainure 14 dans l'une ou l'autre des directions d'emboîtement E ou de déboîtement D. De préférence, on ajuste la position longitudinale de l'équerre 2' (ou 2") le long de la rainure 14 de la planche 1, en faisant coulisser l'élément d'assemblage 24 de l'aile 20b dans la rainure 14 de la planche 1 et dans la direction d'emboîtement D (figure 23) jusqu'à ce que l'autre aile 20a de l'équerre soit au contact du bord transversal d'extrémité 13 de la planche 1.

On positionne la deuxième planche 1' transversalement, et en l'espèce perpendiculairement, à la première planche 1, le bord transversal 13 de la deuxième planche 1' étant orienté vers la face interne 10 de l'autre planche 1 portant l'équerre d'assemblage, et on déplace la deuxième planche 1' ou la première planche 1 portant l'équerre d'assemblage 2' (ou 2"), de manière à emboîter l'élément d'assemblage mâle 24 porté par l'aile 20a dans la rainure d'assemblage 14 de l'autre planche 1'. Au cours de cet emboîtement, on fait coulisser la deuxième planche 1' par rapport à l'élément d'assemblage mâle 24 emboîté dans la rainure d'assemblage 14 de la planche 1, jusqu'à ce que le bord transversal 13 de la deuxième planche 1' soit positionné au contact de la face interne 10 de la première planche 1 (figure 24). Les crans de blocage 24e de l'élément d'assemblage 24 de l'aile 20a empêchent le coulissement de l'élément d'assemblage mâle 24 dans la rainure 14 dans la direction de déboîtement D.

En référence à la figure 25, l'équerre d'assemblage de l'invention permet également un ajustement de la position longitudinale de la planche 1' par rapport la planche 1, de manière par exemple à compenser lors de l'assemblage des erreurs de prise de mesure et /ou de découpe des planches, ou de manière à adapter au mieux l'assemblage de planches à l'ouverture dans laquelle il est posé. Par exemple, en partant de l'assemblage de la figure 24, le poseur peut très facilement, en tapant sur la face interne 10 la planche 1', faire coulisser à force la planche 1 et l'équerre d'assemblage longitudinalement par rapport à la planche 1 pour les amener dans la position de la figure 25.

Dans la variante des figures 23 et 24, les planches 1 et 1' comportent une seule rainure d'assemblage 14. Dans une autre variante, de manière comparable à la figure 15, chaque planche 1 et 1' pourrait comporter plusieurs rainures d'assemblage, et pourraient être assemblées deux à deux au moyen de plusieurs équerres d'assemblage 2' (ou 2").

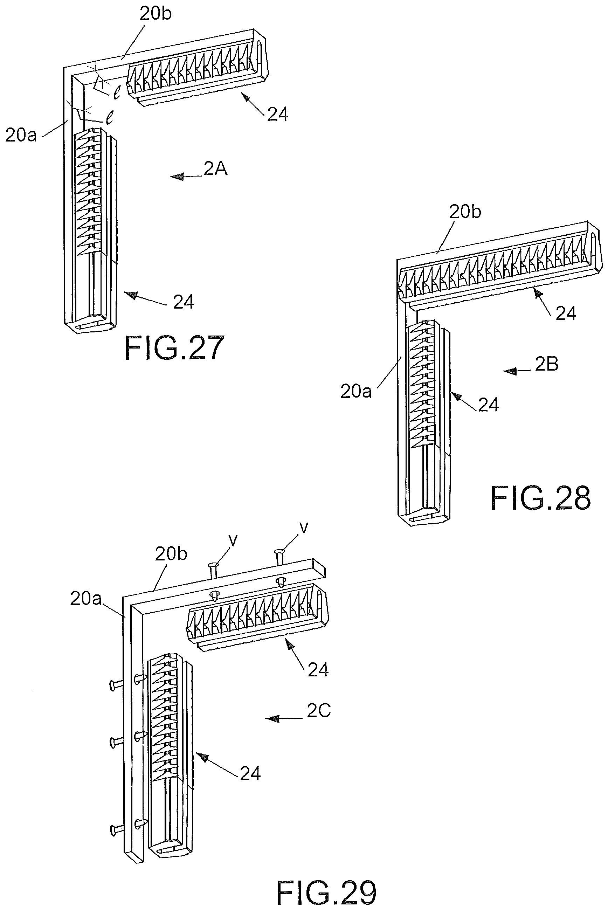

On a représenté sur les figures 27 et 28, deux autres exemples d'équerre d'assemblages 2A et 2B conformes à l'invention dans lesquelles la largeur (l) des ailes 20a, 20b est plus faible que celle des exemples des figures précédentes.

On a représenté sur la figure 29, un exemple d'équerre d'assemblage 2C conforme à l'invention, dans lequel les éléments d'assemblage mâles 24 sont des pièces rapportées, qui peuvent être fixés par des vis V sur les deux ailes respectives 20a, 20b de l'équerre d'assemblage, et qui peuvent être séparés des deux ailes 20a,20b.

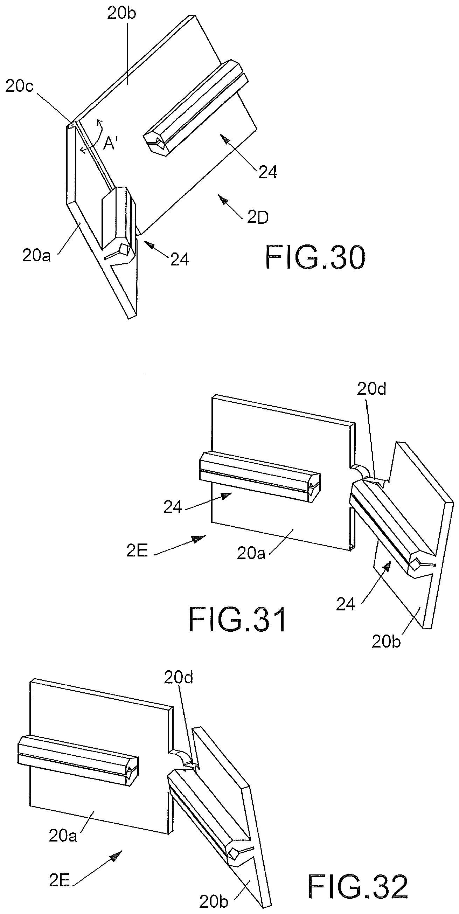

On a représenté sur la figure 30, un exemple d'équerre d'assemblage 2D conforme à l'invention, dans lequel les deux ailes 20a, 20b de l'équerre d'assemblage sont articulées l'une par rapport à l'autre au moyen d'une charnière 20c, de manière à permettre un réglage de l'angle d'assemblage interne (A).

On a représenté sur les figures 31 et 32, un exemple d'équerre d'assemblage 2E conforme à l'invention, dans lequel les deux ailes 20a, 20b de l'équerre d'assemblage sont articulées l'une par rapport à l'autre au moyen d'une charnière 20d, qui permet un réglage de l'angle d'assemblage interne, mais également un pivotement en rotation d'une aile 20a de l'équerre d'assemblage par rapport à l'autre aile 20b.

## Revendications

1. Ensemble comportant au moins deux planches (1 ; 1'), et au moins un moyen d'assemblage (2 ; 2' ; 2" ; 2A ; 2B ; 2C, 2D ; 2E) des deux planches (1 ; 1'), chaque planche (1 , 1') comportant une face interne (10), une face externe (11), deux bords longitudinaux (12) qui s'étendent suivant la direction longitudinale de la planche, et deux bords transversaux (13) qui s'étendent transversalement aux bords longitudinaux, ledit moyen d'assemblage permettant d'assembler les deux planches (1 ; 1') positionnées bout à bout et transversalement l'une par rapport à l'autre, avec un bord transversal (13) de l'une (1') des planches (1, 1') orienté vers la face interne (10) de l'autre planche (1), **caractérisé en ce que** chaque planche (1 ; 1') comporte sur sa face externe (11) au moins une rainure d'assemblage externe longitudinale (14), qui s'étend dans la direction longitudinale de la planche, et ledit moyen d'assemblage comporte au moins deux éléments d'assemblage mâles (24) qui sont reliés ou aptes à être reliés entre eux par un pont de liaison (20a/20b), et qui sont aptes à être emboîtés respectivement dans les rainures d'assemblage externes longitudinales (14) des deux planches, dans lequel le pont de liaison comporte deux ailes rigides (20a ; 20b), dont les faces internes (21) définissent un angle d'assemblage interne (A) inférieur à 180°, dans lequel chaque élément d'assemblage mâle (24) est en saillie par rapport à la face interne (21) d'une aile du pont de liaison, et dans lequel la distance d₁ entre au moins un élément d'assemblage mâle (24) porté par l'une (20a) des ailes du pont de liaison et la face interne (21) de l'autre aile (20b) du pont de liaison est supérieure à l'épaisseur e d'une planche.

2. Ensemble selon la revendication 1, dans lequel les éléments d'assemblage mâles (24) sont aptes à être emboîtés respectivement dans les rainures d'assemblage externes longitudinales (14) des deux planches, de telle sorte que les deux faces internes (21) des deux ailes (20a ; 20b) du pont de liaison sont en contact respectivement avec les faces externes (11) des deux planches assemblées.

3. Ensemble selon l'une quelconque des revendications 1 ou 2, dans lequel le pont de liaison forme une équerre d'assemblage rigide dont les deux ailes (20a ; 20b) sont fixes l'une part rapport à l'autre, ou forme une équerre d'assemblage dont les deux ailes (20a ; 20b) sont articulées l'une par rapport à l'autre, de manière à permettre au moins un réglage de l'angle d'assemblage interne (A).

4. Ensemble selon l'une quelconque des revendications précédentes, dans lequel au moins un élément d'assemblage mâle (24), et de préférence chaque élément d'assemblage mâle (24), peut être emboîté avec ou sans jeu dans la rainure externe longitudinale (14) correspondante d'une planche, et peut être immobilisé par serrage dans ladite rainure (14).

5. Ensemble selon la revendication 4, dans lequel au moins un élément d'assemblage mâle (24), et de préférence chaque élément d'assemblage mâle (24), est déformable de manière à permettre un serrage de l'élément d'assemblage mâle (24) dans la rainure externe longitudinale correspondante (14) d'une planche (1 ; 1'), et de préférence est élastiquement déformable de manière à permettre un serrage élastique de l'élément d'assemblage mâle (24) dans la rainure externe longitudinale correspondante (14) d'une planche (1 ; 1').

6. Ensemble selon l'une quelconque des revendications précédentes, dans lequel au moins un élément d'assemblage mâle (24), et de préférence chaque élément d'assemblage male (24), est emboîtable dans une rainure d'assemblage (14) d'une planche dans une direction d'emboîtement transversale à la face externe (11) de la planche.

7. Ensemble selon l'une quelconque des revendications précédentes, dans lequel au moins un élément d'assemblage mâle (24) comporte des crans de serrage (24d) qui permettent d'augmenter la friction entre cet élément d'assemblage mâle (24) et les parois de la rainure d'assemblage (14), dans laquelle il est emboîté, sans toutefois empêcher un coulissement forcé dudit élément d'assemblage mâle (24) dans les deux directions longitudinales (E, D) le long de ladite rainure, et dans lequel au moins un élément d'assemblage mâle (24) comporte des crans de blocage (24e) qui, une fois l'élément d'assemblage mâle(24) emboîté dans une rainure d'assemblage (14) empêchent le coulissement longitudinal dudit élément d'assemblage mâle (24) dans la rainure d'assemblage (14) dans une direction de déboîtement (D), et de préférence dans lequel un élément d'assemblage mâle (24) comporte des crans de serrage (24d) et ne comporte pas de crans de blocage (24e), et l'autre élément d'assemblage mâle (24) comporte des crans de blocage (24e).

8. Assemblage réalisé à partir de l'ensemble visé à l'une quelconque des revendications précédentes et comportant au moins deux planches (1 ; 1'), qui sont assemblées bout à bout et transversalement l'une par rapport à l'autre, avec un bord transversal (13) de l'une (1') des planches (1 ; 1'), dite deuxième planche, orienté vers la face interne (10) de l'autre planche (1), dite première planche, les éléments d'assemblage mâles (24) du moyen d'assemblage (2 ; 2' ; 2" ; 2A ; 2B ; 2C, 2D ; 2E) étant emboîtés respectivement dans les rainures d'assemblage longitudinales externes(14) des deux planches, et le pont de liaison (2 ; 2' ; 2" ; 2A ; 2B ; 2C, 2D ; 2E) du moyen d'assemblage étant positionné à l'extérieur de l'angle interne formé par les deux planches (1 ; 1'), et de préférence au contact des faces externes (11) des deux planches (1 ; 1').

9. Assemblage selon la revendication 8, comportant au moins trois planches (1 ; 1' ; 1") qui sont assemblées bout à bout et transversalement l'une par rapport à l'autre, en sorte de former un cadre ouvert en forme de U, ou comportant au moins quatre planches (1 ; 1' ; 1" ; 1''') qui sont assemblées bout à bout et transversalement l'une par rapport à l'autre, en sorte de former un cadre fermé à quatre côtés.

10. Utilisation de l'assemblage de l'une quelconque des revendications 8 à 9 comme caisson (C) dans une ouverture (O), et notamment comme caisson de porte, de fenêtre ou de baie vitrée.

11. Procédé d'assemblage de deux planches (1 1') de l'ensemble visé à l'une quelconque des revendications 1 à 7 comprenant le positionnement des deux planches bout à bout et transversalement l'une par rapport à l'autre, avec un bord transversal (13) de l'une (1') des planches (1 ; 1'), dite deuxième planche, orienté vers la face interne (10) de l'autre planche (1), dite première planche, et l'emboîtement des éléments d'assemblage mâles (24) du moyen d'assemblage (2 ; 2' ; 2" ; 2A ; 2B ; 2C, 2D ; 2E) respectivement dans deux rainures d'assemblage longitudinales externe (14) des deux planches.

12. Procédé de fabrication et de pose d'un caisson de porte, fenêtre ou baie vitrée, **caractérisé en ce qu'**on fabrique un caisson (C) à trois ou quatre côtés en mettant en œuvre le procédé d'assemblage visé à la revendication 11 avec trois (1 ; 1' ; 1") ou quatre planches (1 ; 1' ; 1" ; 1'''') et au moins trois ou quatre moyens d'assemblage, et on pose le caisson dans une ouverture (O) d'une paroi (P).

## Patentansprüche

1. Baugruppe mit mindestens zwei Platten (1; 1') und mindestens einem Montagemittel (2; 2'; 2"; 2A; 2B; 2B; 2C, 2D; 2E) der beiden Platten (1; 1'), wobei jede Platte (1, 1') eine Innenfläche (10), eine Außenfläche (11), zwei Längskanten (12), die sich in Längsrichtung der Platte erstrecken, und zwei Querkanten (13), die sich quer zu den Längskanten erstrecken, aufweist, wobei die Verbindungsmittel die Verbindung der beiden Platten (1, 1') aneinandergereiht und transversal zueinander angeordnet ermöglichen, wobei eine Querkante (13) einer (1') der Platten (1, 1') der Innenfläche (10) der anderen Platte (1) zugewandt ist,
**dadurch gekennzeichnet, dass** jede Platte (1; 1') auf ihrer Außenfläche (11) mindestens eine in Plattenlängsrichtung verlaufende äußere Längsverbindungsnut (14) aufweist und die Verbindungsmittel mindestens zwei Stiftverbindungselemente (24) aufweisen, die über eine Verbindungsbrücke (20a/20b) miteinander verbunden oder verbindbar sind und die jeweils zum Einstecken in die äußeren Längsverbindungsnuten (14) der beiden Platten ausgelegt sind, wobei die Verbindungsbrücke zwei starre Schenkel (20a; 20b) aufweist, deren Innenflächen (21) einen inneren Verbindungswinkel (A) von weniger als 180° einschließen, wobei jedes männliche Verbindungselement (24) aus der Innenfläche (21) eines der Schenkel der Verbindungsbrücke ragt, und wobei der Abstand d₁ zwischen mindestens einem männlichen Verbindungselement (24), das von einem (20a) der Schenkel der Verbindungsbrücke getragen wird, und der Innenfläche (21) des anderen Schenkels (20b) der Verbindungsbrücke größer ist als die Dicke e einer Platte.

2. Baugruppe nach Anspruch 1, wobei die männlichen Verbindungselemente (24) jeweils zum Einpassen in die äußeren Längsverbindungsnuten (14) der beiden Platten geeignet sind, so dass die beiden Innenflächen (21) der beiden Schenkel (20a; 20b) der Verbindungsbrücke in Kontakt mit den Außenflächen (11) der beiden verbundenen Platten stehen.

3. Baugruppe nach einem der Ansprüche 1 oder 2, wobei die Verbindungsbrücke eine starre Verbindungsklammer bildet, in der die beiden Schenkel (20a; 20b) relativ zueinander unbeweglich sind, oder eine Verbindungsklammer bildet, deren beide Schenkel (20a; 20b) gelenkig miteinander verbunden sind, um wenigstens eine Einstellung des inneren Verbindungswinkels (A) zu erlauben.

4. Baugruppe nach einem der vorhergehenden Ansprüche,
wobei mindestens ein männliches Verbindungselement (24) und vorzugsweise jedes männliche Verbindungselement (24) mit oder ohne Spiel in die entsprechende äußere Längsverbindungsnut (14) einer Platte eingesetzt und durch Einklemmen in die Nut (14) befestigt werden kann.

5. Baugruppe nach Anspruch 4, wobei mindestens ein männliches Verbundungselement (24), vorzugsweise jedes männliche Verbindungselement (24), verformbar ist, um eine Sicherung des männlichen Verbindungselements (24) in der entsprechenden äußeren Längsverbindungsnut (14) einer Platte (1; 1') zu ermöglichen, und zwar vorzugsweise elastisch verformbar, so dass ein elastisches Verklemmen des männlichen Verbindungselements (24) in der entsprechenden äußeren Längsverbindungsnut (14) einer Platte (1; 1') ermöglicht wird.

6. Baugruppe nach einem der vorhergehenden Ansprüche, wobei mindestens ein männliches Verbindungselement (24) und insbesondere jedes männliche Verbindungselement (24) in einer transversal zur Außenfläche (11) der Platte verlaufenden Einsteckrichtung in die äußere Längsverbindungsnut (14) einer Platte einsteckbar ist.

7. Baugruppe nach einem der vorstehenden Ansprüche, wobei mindestens ein männliches Verbindungselement (24) Klemmkerben (24d) umfasst, die die Reibung zwischen dem männliche Verbindungselement (24) und den Wänden der Längsverbindungsnut (14), in die es eingesteckt ist, erhöhen, ohne jedoch ein forciertes Verschieben des männlichen Verbindungselements(24) entlang der Nut in beiden Längsrichtungen (E, D) zu verhindern, und in dem mindestens ein männliches Verbindungselement (24) Verriegelungskerben (24e) umfasst, die, wenn das männliche Verbindungselement (24) einmal in eine Montagenut (14) eingesteckt wurde, eine Längsverschiebung des männlichen Montageelements (24) in der Montagenut (14) in einer Öffnungsrichtung (D) verhindern, wobei vorzugsweise ein männliches Verbindungselement (24) Klemmkerben (24d) und keine Verriegelungskerben (24e) aufweist, und das andere männliche Verbindungselement (24) Verriegelungskerben (24e) aufweist.

8. Verbund, erstellt aus einer Baugruppe nach einem der vorhergehenden Ansprüche, umfassend wenigstens zwei Platten (1; 1'), die aneinandergereiht und transversal zueinander miteinander verbunden sind, wobei eine Querkante (13) einer (1') der Platten (1; 1'), und zwar der zweiten Platte, der Innenfläche (10) der anderen Platte (1), und zwar der ersten Platte, gegenüber liegt, wobei die männlichen Verbindungsmittel (24) der Montagemittel (2; 2'; 2"; 2A; 2B; 2C, 2D; 2E) jeweils in die äußeren Längsverbindungsnuten (14) der beiden Platten eingesetzt sind, und die Verbindungsbrücke (2; 2'; 2"; 2A; 2B; 2C, 2D; 2E) der Montagemittel außerhalb des durch die beiden Platten (1; 1') eingeschlossenen Innenwinkels, liegt, vorzugsweise in Kontakt mit den Flächen (11) der beiden Platten (1; 1').

9. Verbund nach Anspruch 8, umfassend mindestens drei Platten (1; 1'; 1"), die aneinandergereiht und transversal zueinander miteinander verbunden sind, um einen offenen U-förmigen Rahmen zu bilden, oder mit mindestens vier Platten (1; 1'; 1"; 1'''), die aneinandergereiht und transversal zueinander verbunden sind, um einen geschlossenen vierseitigen Rahmen zu bilden.

10. Verwendung eines Verbunds nach einem der Ansprüche 8 bis 9 als Kasten (C) in einer Öffnung (0), und insbesondere als Tür-, Fenster- oder Erkerfutter.

11. Verfahren zum Verbinden von zwei Platten (1, 1') der Baugruppe nach einem der Ansprüche 1 bis 7, umfassend das Positionieren der beiden Platten aneinandergereiht und transversal zueinander, wobei eine Querkante (13) einer (1') der Platten (1; 1'), und zwar der zweiten Platte, der Innenfläche (10) der anderen Platte (1), und zwar der ersten Platte, zugewandt ist, und die männlichen Verbindungselemente (24) der Verbindungsmittel (2; 2'; 2"; 2A; 2A; 2B; 2C, 2D; 2E) jeweils in zwei äußeren Längsverbindungsnuten (14) der beiden Platten eingesteckt werden.

12. Verfahren zur Herstellung und Montage eines Tür-, Fenster- oder Erkerfutters, **dadurch gekennzeichnet, dass** ein Kasten (C) in drei oder vier Dimensionen unter Verwendung des in Anspruch 11 genannten Montageverfahrens mit drei (1; 1'; 1") oder vier Platten (1'; 1'; 1"; 1'''') und mindestens drei oder vier Montagemitteln hergestellt wird und der Kasten in eine Öffnung (0) in einer Wand (P) eingesetzt wird.

## Claims

1. Set comprising at least two boards (1; 1'), and at least one means (2; 2'; 2"; 2A; 2B; 2C; 2D; 2E) for assembling the two boards (1; 1'), each board (1, 1') comprising an inner face (10), an outer face (11), two longitudinal edges (12) extending in the longitudinal direction of the board, and two transverse edges (13) extending transversely to the longitudinal edges, said assembly means making it possible to assemble the two boards (1; 1') which are positioned end to end and transversely relative to one another, a transverse edge (13) of one (1') of the boards (1, 1') being oriented toward the inner face (10) of the other board (1), **characterized in that** each board (1; 1') comprises at least one outer longitudinal assembly groove (14) in its outer face (11), which groove extends in the longitudinal direction of the board, and said assembly means comprises at least two male assembly elements (24) which are interconnected or are capable of being interconnected by a connecting bridge (20a/20b), and which are capable of being engaged in the respective outer longitudinal assembly grooves (14) in the two boards, the connecting bridge comprising two rigid flanges (20a; 20b), the inner faces (21) of which define an internal assembly angle (A) of less than 180°, each male assembly element (24) projecting from the inner face (21) of a flange of the connecting bridge, and the distance d₁ between at least one male assembly element (24) supported on one (20a) of the flanges of the connecting bridge and the inner face (21) of the other flange (20b) of the connecting bridge being greater than the thickness e of a board.

2. Set according to claim 1, wherein the male assembly elements (24) are capable of being engaged in the respective outer longitudinal assembly grooves (14) in the two boards such that the two inner faces (21) of the two flanges (20a; 20b) of the connecting bridge are in contact with the respective outer faces (11) of the two assembled boards.

3. Set according to any one of claim 1 or claim 2, wherein the connecting bridge forms a rigid assembly bracket of which the two flanges (20a, 20b) are stationary relative to one another, or said connecting bridge forms an assembly bracket of which the two flanges (20a; 20b) are hinged relative to one another in such a way as to allow at least one adjustment to the internal assembly angle (A).

4. Set according to any of the preceding claims, wherein at least one male assembly element (24), and preferably each male assembly element (24), can be engaged in the corresponding outer longitudinal groove (14) in a board with or without clearance, and can be secured in place by clamping in said groove (14).

5. Set according to claim 4, wherein at least one male assembly element (24), and preferably each male assembly element (24), is deformable in such a way as to allow clamping of the male assembly element (24) in the corresponding outer longitudinal groove (14) in a board (1; 1'), and is preferably elastically deformable in such a way as to allow elastic clamping of the male assembly element (24) in the corresponding outer longitudinal groove (14) in a board (1; 1').

6. Set according to any of the preceding claims, wherein at least one male assembly element (24), and preferably each male assembly element (24), is engageable in an assembly groove (14) in a board in an engaging direction transverse to the outer face (11) of the board.

7. Set according to any of the preceding claims, wherein at least one male assembly element (24) comprises clamping notches (24d) which make it possible to increase the friction between said male assembly element (24) and the walls of the assembly groove (14) in which it is engaged, without, however, preventing forced sliding of said male assembly element (24) in the two longitudinal directions (E, D) along said groove, and wherein at least one male assembly element (24) comprises locking notches (24e) which, once the male assembly element (24) is engaged in an assembly groove (14), prevent the longitudinal sliding of said male assembly element (24) in the assembly groove (14) in a disengaging direction (D), and preferably wherein a male assembly element (24) comprises clamping notches (24d) and does not comprise locking notches (24e), and the other male assembly element (24) comprises locking notches (24e).

8. Assembly made from the set according to any of the preceding claims, comprising at least two boards (1; 1') which are assembled end to end and transversely relative to one another, a transverse edge (13) of one (1') of the boards (1; 1'), referred to as a second board, being oriented toward the inner face (10) of the other board (1), referred to as a first board, the male assembly elements (24) of the assembly means (2; 2'; 2"; 2A; 2B; 2C; 2D; 2E) being engaged in the respective outer longitudinal assembly grooves (14) in the two boards, and the connecting bridge (2; 2'; 2"; 2A; 2B; 2C; 2D; 2E) of the assembly means being positioned outside the internal angle formed by the two boards (1; 1'), and preferably in contact with the outer faces (11) of the two boards (1; 1').

9. Assembly according to claim 8, comprising at least three boards (1; 1'; 1") which are assembled end to end and transversely relative to one another so as to form an open U-shaped frame, or comprising at least four boards (1; 1'; 1"; 1''') which are assembled end to end and transversely relative to one another so as to form a closed four-sided frame.

10. Use for the assembly according to any one of claim 8 or claim 9 as a casing (C) in an opening (O), and in particular as a casing for a door, for a window or for a bay window.

11. Method for assembling two boards (1, 1') of the set according to any of claims 1 to 7, including positioning the two boards end to end and transversely relative to one another, a transverse edge (13) of one (1') of the boards (1; 1'), referred to as a second board, being oriented toward the inner face (10) of the other board (1), referred to as a first board, and including engaging the male assembly elements (24) of the assembly means (2; 2'; 2"; 2A; 2B; 2C; 2D; 2E) in respective two outer longitudinal assembly grooves (14) in the two boards.

12. Method for manufacturing and installing a casing for a door, a window or a bay window, **characterized in that** a three- or four-sided casing (C) is manufactured by implementing the assembly method according to claim 11 using three (1; 1'; 1") or four boards (1; 1'; 1"; 1'''') and at least three or four assembly means, and the casing is installed in an opening (O) in a wall (P).
